# NEUE EUROPÄISCHE PATENTSCHRIFT

(11) **EP 0 659 516 B2**
(45) Veröffentlichungstag und Bekanntmachung des Hinweises auf die Entscheidung über den Einspruch: **26.07.2000**
(45) Hinweis auf die Patenterteilung: 05.03.1997
(21) Anmeldenummer: 94117134.0
(22) Anmeldetag: 29.10.1994
(51) Int. Cl.: B23K 20/10, G10K 11/08

(54) **Ultraschallschweissgerät**
Ultrasonic welding apparatus
Appareil de soudage par ultrasons

(30) Priorität: 23.12.1993 DE 4344186
(43) Veröffentlichungstag der Anmeldung: 28.06.1995
(73) Patentinhaber: MARTIN WALTER ULTRASCHALLTECHNIK GmbH, D-75334 Straubenhardt (DE)
(72) Erfinder: Martin, Walter, D-75334 Straubenhardt (DE); Weber, Dieter, D-76307 Karlsbad (DE)
(74) Vertreter: Trappenberg, Hans

(56) Entgegenhaltungen:
- DE-A- 2 253 528
- US-A- 3 166 840
- US-A- 3 209 448
- JAPANESE JOURNAL OF APPLIED PHYSICS, Bd. 24,Nr. 24, 1985 TOKYO (JP ), Seiten 163-165, TSUJINO ET AL. 'Studies on ultrasonic welding of ring shape weldment with two vibration systems'
- JAPANESE JOURNAL OF APPLIED PHYSICS , Bd. 31, 1992 TOKYO ( JP ), Seiten 287-289, XP 000322518 TSUJINO ET AL. 'Ultrasonic welding of thin metal plates using a complex vibration welding tip'

## Beschreibung

Die Erfindung betrifft ein Ultraschallschweißgerät nach dem Oberbegriff des Anspruchs 1.

Ultraschallschweißgeräte finden in der heutigen Zeit eine immer breitere Anwendung. So können mittels Ultraschall neben Kunststoffen auch Metalle wie beispielsweise Aluminium oder Kupfer geschweißt werden.

Will man beispielsweise zwei Metalle miteinander verschweißen, so muß man sie mit hohem Druck zusammenpressen und ihre Struktur mittels Ultraschall in Schwingungen versetzen. Dies geschieht regelmäßig dadurch, daß die Metalle mit hohem Druck gegen einen Stab gedrückt werden, der mit einer Frequenz im Ultraschalbereich schwingt. Je höher die Schwingungsamplitude ist umso geringer kann der statische Druck eingestellt werden. Es ist daher erstrebenswert, die zu verschweißenden Gegenstände mit möglichst großer Amplitude zu erregen.

Je größer die Amplitude ist, desto größer ist auch die Energie, die an die zu verschweißenden Gegenstände abgegeben wird. Somit ist es ebenfalls erstrebenswert, möglichst viel Energie an die Schweißstelle zu bringen.

Bei herkömmlichen Ultraschallschweißgeräten ist die Energiezufuhr durch den zur Verfügung stehenden Wandler begrenzt Aufgrund baulicher Gegebenheiten können nicht Wandler mit beliebig hoher Energie verwendet werden. Die bei Ultraschallschweißgeräten zur Verfügung stehende Energie und somit die Größe der Schweißnaht ist daher begrenzt.

Aus der DT 2 253 528 ist eine Vorrichtung zum Schweißen mit Ultraschall bekannt, bei der dem Schweißgut die Schwingungsenergie über zwei mechanisch nicht miteinander gekoppelte gleichphasig oder gegenphasig schwingende Erreger zugeführt wird. Bei den Erregern handelt es sich um Ultraschallwandler, welche jeweils an einem Ende einer Sonotrode angeordnet sind. Zwei zu verwschweißende Werkstücke werden zwischen die Sonotrodenspitzen angeordnet. Die beiden Sonotrodenspitzen und damit die beiden zu verschweißenden Werkstücke werden durch eine Kraft aufeinander gedrückt.

Zwischen den beiden Sonotrodenspitzen kann auch ein Werkstück angeordnet sein, in welches dann die Energie von beiden Sonotroden eingeleitet wird. Da durch die Sonotroden bewegte Werkstück wird mittels einer äußeren Kraft auf ein sich in Ruhe befindliches Werkstück gedrückt.

Des weiteren ist aus der US-PS 3,039,333 eine Vorrichtung zur Einleitung hoher Vibrationsenergie in ein Werkstück bekannt, bei welcher ein Koppelelement vorhanden ist, an dessen Stirnseiten Schallwandler angeordnet sind. Das Koppelelement ist so dimensioniert, daß seine Resonanzfrequenz der Betriebsfrequenz der Schallwandler entspricht. In der Mitte des Koppelelements ist eine Sonotrode fest mit dem Koppelelement verbunden.

Es ist Aufgabe der Erfindung, ein eingangs genanntes Ultraschallschweißgerät so auszubilden, daß die Energieversorgung des zweiten Schallwandlers auf einfache Weise erfolgt.

Die Lösung dieser Aufgabe ergibt sich aus den Merkmalen des Anspruchs 1. Vorteilhafte Weiterbildungen der Erfindung ergeben sich aus den Unteransprüchen.

Gemäß der Erfindung ist bei einem eingangs genannten Ultraschallschweißgerät an der freien Stirnseite des Resonators ein zweiter longitudinale Schwingungen ausführender Schallwandler angekoppelt, welcher zum ersten Schallwandler synchron schwingt. Der zweite Schallwandler gibt seinerseits Energie an den Resonator ab. Hierdurch verdoppelt sich die Energie, die zum Schweißen zur Verfügung steht, nahezu. Es können somit größere Gegenstände miteinander verschweißt werden.

Mit der erfindungsgemäßen Vorrichtung erreicht man aber auch, daß, wenn kein erhöhter Energiebedarf zum Schweißen besteht, kleinere Wandler verwendet werden können, wodurch das Ultraschallschweißgerät eine günstigere Bauform erhält.

Ein weiterer Vorteil der erfindungsgemäßen Ausgestaltung eines Ultraschallschweißgeräts ist, daß die Werkstücke im Schwingungsmaximum an den Resonator gepreßt werden können.

Besonders vorteilhaft ist es, daß die elektrische Leitung zum zweiten Wandler axial durch den Resonator erfolgt. Da als Resonator nicht nur Vollmaterial, sondern auch rohrförmiges Material verwendet werden kann, kann der Resonator jedenfalls mit einer axialen Bohrung versehen werden, durch die die elektrische Leitung zum zweiten Wandler geführt werden kann. Es ist somit auf vorteilhafte Weise möglich, den zweiten Wandler ohne störende, außen verlaufende Leitungen mit Energie zu versorgen.

Eine besondere Ausführungsform der Erfindung sieht vor, daß die Länge des Resonators einem gradzahligen Vielfachen von lambda/2 entspricht. Hierdurch befindet sich genau in der Mitte zwischen den beiden Wandlern ein Schwingungsmaximum. Das heißt, die Stelle, an der die zu schweißenden Gegenstände gegen den Resonator gedrückt werden, befindet sich in der Mitte zwischen den beiden Wandlern, wodurch sie gut zugänglich ist. Des weiteren kann bei einer solchen Anordnung das Ultraschallschweißgerät symmetrisch ausgebildet werden.

Bei einer weiteren Ausführungsform der Erfindung erfolgt die Ankopplung des Resonators an die Wandler mtitels Transformationsstücken. Hierdurch kann die Amplitude, mit der die Wandler an den Resonator angekoppelt werden, auf optimale Werte eingestellt werden.

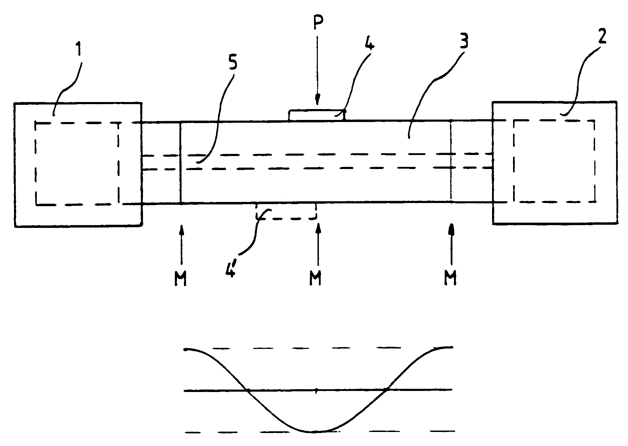

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Zeichnung eine schematische Anordnung eines erfindungsgemäßen Ultraschallschweißgeräts.

Wie der Figur zu entnehmen ist, weist ein Ultraschallschweißgerät einen ersten Wandler 1 und einen zweiten Wandler 2 auf. Die beiden Wandler 1, 2 sind mit einem Resonator 3 verbunden. Die Ankopplung erfolgt an den beiden Stirnseiten des Resonators 3. Die Wandler 1, 2 haben an der Koppelstelle ein Schwingungsmaximum M. Der Resonator 3 hat die Länge zwei lambda/2, so daß sich auch in der Mitte des Wandlers ein Schwingungsmaximum M ausbildet. Der Amplitudenverlauf ist unterhalb des Resonators 3 schematisch dargestellt.

In der Mitte des Wandlers wird ein zu schweißendes Werkstück mit einem Druck P an den Resonator 3 gepreßt. Des Werkstück 4 ist so angeordnet, daß sich die Mitte des Werkstücks 4 im Schwingungsmaximum M befindet. Es ist somit möglich, die maximale Amplitude der Ultraschallschwingung auszunutzen.

Bei einem herkömmlichen Ultraschallschweißgerät müßte das Werkstück 4 neben dem Schwingungsmaximum M angeordnet werden, da der Resonatorstab sich nur bis zum Schwingungsmaximum M erstreckt. Zur Verdeutlichung wurde ein Werkstück 4' in die Zeichnung aufgenommen, welches so angeordnet ist, wie es bei einem herkömmlichen Ultraschallschweißgerät angeordnet werden müßte.

## Patentansprüche

1. Ultraschallschweißgerät mit einem longitudinale Schwingungen mit Wellenlänge lambda ausführenden ersten Schallwandler (1) und einem stabförmigen Resonator (3) der Länge lamda/2 oder einem Vielfachen davon, welcher mit dem Schallwandler (1) an einer Stirnseite gekoppelt ist, wobei an der freien Stirnseite des Resonators (3) ein zweiter longitudinale Schwingungen ausführender Schallwandler (2) angekoppelt ist, welcher zum ersten Schallwandler (1) synchron schwingt,
dadurch gekennzeichnet,
daß die Stromzuführung zum zweiten Schallwandler (2) axial durch den Resonator (3) erfolgt.

2. Ultraschallschweißgerät nach Anspruch 1,
dadurch gekennzeichnet,
daß die Länge des Resonators (3) einem gradzahligen Vielfachen von lambda/2 entspricht.

3. Ultraschallschweißgerät nach Anspruch 1 oder 2,
dadurch gekennzeichnet,
daß die Ankopplung des Resonators (3) an die Wandler (1, 2) mittels Transformationsstücken erfolgt.

## Claims

1. An ultrasonic welding apparatus having a first sound transducer (1) for producing longitudinal oscillations of a wavelength lambda and a bar-shaped resonator (3) of a length lambda/2 or a multiple thereof, which is coupled to the sound transducer (1) at one end , wherein coupled to the free end of the resonator (3) is a second sound transducer (2) for producing longitudinal oscillations, which oscillates synchronously with the first sound transducer (1), characterised in that the feed of current to the second sound transducer (2) is effected axially through the resonator (3).

2. A ultrasonic welding apparatus according to claim 1 characterised in that the length of the resonator (3) corresponds to an even-numbered multiple of lambda/2.

3. An ultrasonic welding apparatus according to claim 1 or claim 2 characterised in that coupling of the resonator (3) to the transducers (1, 2) is effected by means of transformation portions.

## Revendications

1. Appareil de soudage par ultrasons comprenant un premier transducteur (1) qui exécute des vibrations longitudinales de longueur d'onde λ et un résonateur (3) en forme de tige dont la longueur est égale λ/2 ou à un multiple de cette valeur et qui est accouplé au transducteur (1) sur un côté frontal, un deuxième transducteur (2) exécutant des vibrations longitudinales étant couplé au côté frontal libre du résonateur (3), et oscillant en synchronisme avec le premier transducteur (1), caractérisé par le fait que l'amenée du courant au deuxième transducteur (2) a lieu axialement à travers le résonateur (3).

2. Appareil de soudage par ultrasons selon la revendication 1, caractérisé par le fait que la longueur du résonateur (3) correspond à un multiple entier de λ/2.

3. Appareil de soudage par ultrasons selon la revendication 1 ou 2, caractérisé par le fait que le couplage du résonateur (3) aux transducteurs (1, 2) a lieu au moyen d'éléments de transformation.
